# EUROPÄISCHE PATENTSCHRIFT

(11) **EP 0 507 989 B1**
(45) Veröffentlichungstag und Bekanntmachung des Hinweises auf die Patenterteilung: **26.07.1995**
(21) Anmeldenummer: 91118533.8
(22) Anmeldetag: 30.10.1991
(51) Int. Cl.: H02K 3/00, H02K 3/52, H02K 11/00

(54) **Wicklungsspulen aufweisende elektrische Maschine**
Electrical machine having coil windings
Machine électrique à enroulement à bobines

(30) Priorität: 08.04.1991 DE 4111320
(43) Veröffentlichungstag der Anmeldung: 14.10.1992
(73) Patentinhaber: SIEMENS AKTIENGESELLSCHAFT, 80333 München (DE)
(72) Erfinder: Hahn, Eugen, W-8740 Bad Neustadt (DE); Heim, Bruno, W-8741 Grosseibstadt (DE)

(56) Entgegenhaltungen:
- FR-A- 2 383 541
- US-A- 2 709 763
- US-A- 4 629 918
- US-A- 4 633 114
- SOVIET INVENTIONS ILLUSTRATED, Section EI, Week E15, 26. Mai 1982, Derwent Publications Ltd., London, GB; Class X11, AN E3410; & SU-A-843 104
- PATENT ABSTRACTS OF JAPAN, vol. 3, no. 6 (E-85), 22. Januar 1979; &JP-A-53 133 702

## Beschreibung

Die Erfindung betrifft eine Wicklungsspulen aufweisende elektrische Maschine gemäß dem Oberbegriff des Anspruchs 1.

Eine solche Maschine ist durch die US-A-4 633 114 bekannt. Bei dieser Maschine sind die Klemmteile als Winkelstücke ausgebildet, deren beide Schenkel rechtwinklig zueinander stehen. Mit dem einen Schenkel sind die Winkelstücke zwischen dem Polkern und der auf diesen aufgesteckten Wicklungsspule eingefügt. Mit dem anderen Schenkel untergreifen sie die Wicklungsspule auf der zum freien Ende des Polkerns hin liegende Seite. An dem zwischen Polkern und Wicklungsspule liegenden Schenkel sind zum Polkern hin vorspringende Rastzungen vorgesehen, die in eine am Polkern ausgebildete Nut eingreifen. Hierdurch wird das Winkelstück am Polkern gehalten. Die zum Polkern vorspringenden Rastzungen bedingen in Umfangsrichtung einen entsprechenden Abstand zwischen dem Polkern und der Wicklungsspule. Hierdurch wird der zur Verfügung stehende Wickelraum in der Maschine eingeschränkt. Ferner sind wegen der Anordnung der Winkelstücke auf den beiden Längsseiten der Polkerne auf jeder Längsseite mindestens zwei Winkelstücke notwendig um eine kippsichere Anordnung der Wicklungsspule zu erreichen.

Der Erfindung liegt die Aufgabe zugrunde, eine elektrische Maschine der gattungsgemäßen Art so weiterzubilden, daß der an den Polkernen zur Verfügung stehende Wicklungsraum möglichst optimal genutzt werden kann.

Die Lösung der gestellten Aufgabe gelingt durch die im Kennzeichen des Anspruchs 1 angegebenen Merkmale.

Infolge der Anordnung der Klemmteile auf den Stirnseiten können die Wicklungsspulen an den Längsseiten der Polkerne satt anliegen. Außerdem ist die Möglichkeit gegeben, zwei sich entgegengesetzt in Umfangsrichtung der Maschine erstreckende Haltearme an den Klemmteilen vorzusehen.

Damit ergeben sich mit den beiden auf den Stirnseiten der Polkerne angeordneten Klemmteilen vier Auflagepunkte für die Wicklungsspule, so daß diese kippsicher auf dem Polkern gehalten ist. Durch die Verrastung der Klemmteile innerhalb des von der Wicklungsspule überdeckten Bereichs, steht eine größere Länge des Polkerns für die Unterbringung der Wicklungsspule zur Verfügung. Außerdem können auch die Haltearme selbst noch so ausgeführt werden, daß sich die Wicklungsspulen möglichst über die volle radiale Länge der Polkerne erstrecken können.

Eine besonders gute Klemmwirkung läßt sich dadurch erzielen, daß die Kontur der der Wicklungsspule zugewandten Seite des Klemmteiles dem Verlauf der Wicklungsspule angepaßt ist. Zum Ausgleich von unvermeidbaren Maßtoleranzen ist es vorteilhaft, wenn der an der Wicklungsspule anliegende Wandteil des Klemmteiles nachgiebig ausgebildet ist. Die erforderliche Nachgiebigkeit läßt sich dadurch erreichen, daß das Klemmteil hohl ausgebildet und der an der Wicklungsspule anliegende Wandteil geschlitzt ist, insbes. mit einem in Achsrichtung des Klemmteils durchgehenden Trennschlitz versehen ist. Hierdurch ist der Wandteil in zwei Wandarme unterteilt, die aufgrund der Materialelastizität eine entsprechende Beweglichkeit aufweisen.

Die Verrastung des Klemmteiles an dem Polkern ist auf konstruktiv einfache Weise dadurch möglich, daß an der Stirnseite des Polkerns jeweils mindestens eine innerhalb des von der Wicklungsspule überdeckten Bereiches des Polkerns liegende Bohrung vorgesehen und an der dem Polkern benachbarten Wandseite des Klemmteils mindestens ein mit der Bohrung verrastbarer Noppen federnd angeordnet ist.

Da das Klemmteil eng an den Windungen der Spule anliegt, können an ihm Sensoren, insbesondere zur Erfassung der Wicklungstemperatur, angeordnet werden. Dabei können die Anschlußleitungen solcher Sensoren durch den zwischen den Wandarmen des Klemmteiles bestehenden freien Raum ungehindert nach außen geführt werden.

Zumindest von einer Stirnseite der Maschine müssen Steuer- oder Meßleitungen zur anderen Stirnseite geführt werden. Zu deren Fixierung sind zumindest auf einer Längsseite der Wicklungsspule Halterungen vorgesehen.

Bei Maschinen, bei denen die Wicklungsspulen auf zwischen den Hauptpolen liegende Wendepolkerne aufgesteckt sind, werden zweckmäßigerweise zwischen den Wicklungsspulen der Wendepole und den auf den Hauptpolen aufgebrachten Wicklungsspulen eingefügte Distanzstücke als Halterungen verwendet, wobei diese Distanzstücke mit einem eine Aufnahmenut aufweisenden und die Spulenlängsseite untergreifenden Ansatz versehen sind.

Um den Kühlluftstrom nicht zu behindern, sind die Distanzstücke mit sich in Längsrichtung der Maschine erstreckenden Durchbrechungen versehen.

Anhand eines in der Zeichnung dargestellten Ausführungsbeispieles wird der Anmeldungsgegenstand nachfolgend näher beschrieben. Es zeigt:
- FIG 1: einen mit einer Wicklungsspule bestückten Polkern einer elektrischen Maschine im Schnitt,
- FIG 2: eine Draufsicht auf den mit einer Wicklungsspule bestückten Polkern einer elektrischen Maschine von der Ständerbohrung her,
- FIG 3: eine teilweise aufgebrochene Draufsicht eines Klemmteiles,
- FIG 4: eine Ansicht der an der Stirnseite des Polkerns anliegenden Seite eines Klemmteils,
- FIG 5: eine Haupt- und Wendepole aufweisende elektrische Maschine im Querschnitt.

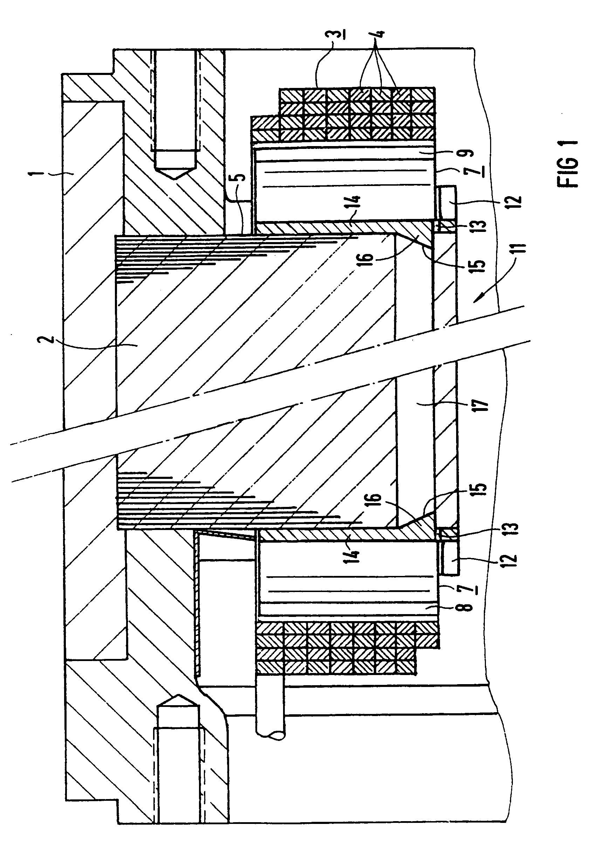

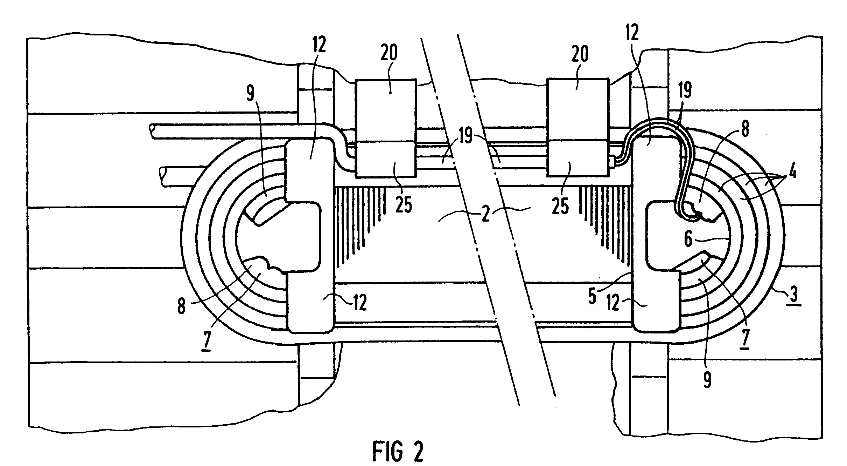

In FIG 1 ist mit 1 der gehäuselose Ständer einer elektrischen Maschine mit integriertem Polkern 2 dargestellt. Auf diesem Polkern 2 ist eine vorgefertigte Wicklungsspule 3 aufgesteckt. Wie aus der Draufsicht der FIG 2 zu erkennen ist, sind die Windungen 4 der Wicklungsspule 3 an den Stirnseiten 5 des Polkerns 2 kreisbogenförmig ausgebildet. Hierdurch entsteht zwischen der flachen Stirnseite 5 des Polkerns 2 und dem Kreisbogen 6 der innersten Windung 4 ein Hohlraum, in den ein die Wicklungsspule 3 auf dem Polkern 2 sicherndes Klemmteil 7, das vorteilhafterweise aus Kunststoff besteht, eingesetzt ist.

Dieses Klemmteil 7 weist zwei in ihrer Außenkontur dem kreisbogenförmigen Verlauf der innersten Windung 4 angepaßte Wandarme 8 und 9 auf. Diese Wandarme 8 und 9 sind an einer ebenen, an der Stirnseite 5 des jeweiligen Polkerns 2 anliegenden Wand 10 des Klemmteils 7 angeformt. Auf der der Ständerbohrung 11 zugewandten Seite weist das Klemmteil 7 ferner zwei Haltearme 12 auf, die sich entgegengesetzt in Umfangsrichtung der Maschine erstrecken und die Wicklungsspule 3 an der der Ständerbohrung zugewandten Seite untergreifen.

An der ebenen Wand 10 des Klemmteils 7 ist durch Einschnitte 13 ein federnder Arm 14 gebildet, an dem ein mit einer Anlaufschräge 15 versehener Noppen 16 angeformt ist. Mit diesem Noppen 16 greift das Klemmteil 7 in eine im Polkern 2 vorgesehene Bohrung 17 ein und ist dadurch gesichert.

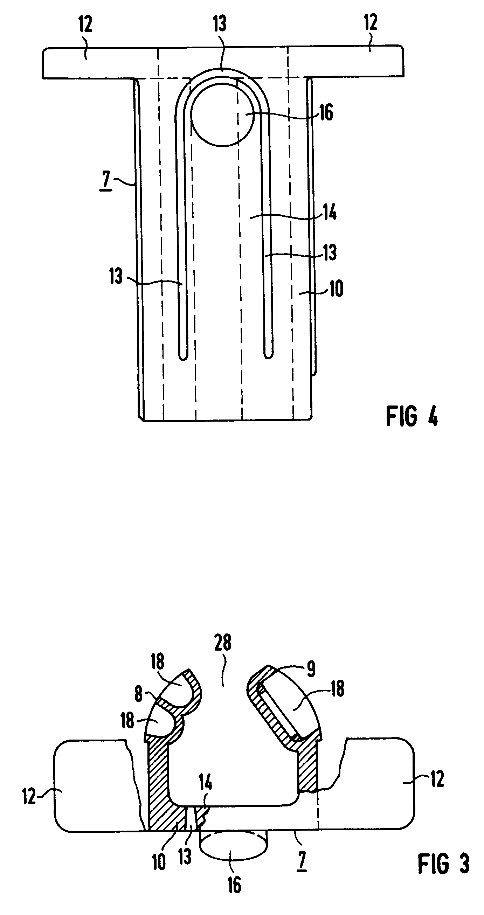

Wie aus der FIG 3 erkennbar, sind an den Wandarmen 8 und 9 Aufnahmenischen 18 ausgeformt, in die Sensoren, z.B. Temperaturfühler, einsetzbar sind. Diese Sensoren kommen an der Wicklungsspule 3 zur Anlage und können daher die Temperatur der Spule sehr gut erfassen. Die Sensoren sind über Anschlußleitungen 19 mit einer zentral an der Maschine oder auch außerhalb derselben angeordneten Auswertestelle verbunden. Von der Einsatzstelle des oder der Sensoren an dem Wandarm 8 bzw.9 werden die Anschlußleitungen 19 durch den freien Raum zwischen den Wandarmen 8 und 9 zur Ständerbohrung hin herausgeführt. Müssen die Anschlußleitungen 19 dann auch noch von der einen Maschinenseite zu der anderen Maschinenseite geführt werden, dann können sie mittels entsprechender Halterungen 20 unterhalb der Längsseite der jeweiligen Wicklungsspule 3 gehalten werden.

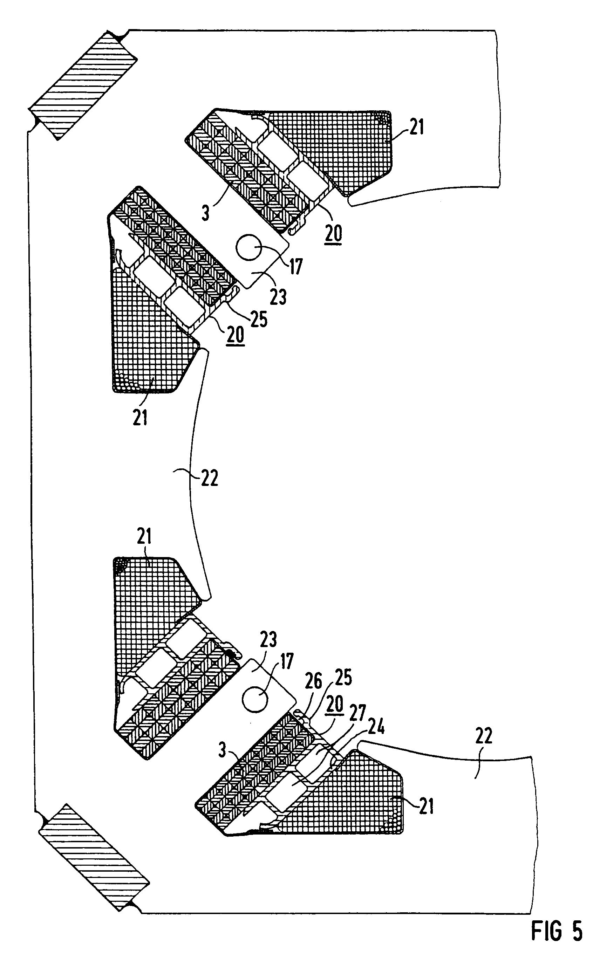

Wie die FIG 5 zeigt, dienen als Halterungen 20 für die Anschlußleitungen 19 Ansätze 25, die an Distanzstücken 24 angeformt sind, welche zwischen den Wicklungsspulen 21 der Hauptpole 22 und den Wicklungsspulen 3 der Wendepole 23 der Maschine eingefügt sind. Auf der an der Längsseite der Wicklungsspule 3 anliegenden Seite der Ansätze 25 ist jeweils eine Aufnahmenut 26 vorgesehen, in die die Anschlußleitungen 19 eingelegt sind.

Die Distanzstücke 24 sind ferner mit sich in Längsrichtung der Maschine erstreckenden Durchbrechungen 27 versehen, um einen möglichst ungehinderten Durchzug der Kühlluft zu ermöglichen.

Bei der Montage des Maschinenständers werden die Wicklungsspulen 3 auf den Polkern 2 der Wendepole 23 aufgeschoben. Danach werden die Klemmteile 7 von der Ständerbohrungsseite her in den zwischen den Stirnseiten 5 der Polkerne 2 und dem Kreisbogen 6 der innersten Windung 4 bestehenden Hohlraum eingeschoben. Dabei können sich die Wandarme 8 und 9 wegen des zwischen ihnen bestehenden Trennschlitzes 28 und der Elastizität ihres Materials auch bei bestehenden Maßabweichungen der einzelnen Kreisbögen 6 entsprechend anpassen, so daß eine gute Anlage dieser Wandarme 8 und 9 an der Rundung der Windungen 4 gegeben ist. Mit der ebenen Wand 10 gleitet das Klemmteil 7 an der Stirnseite 5 des Polkernes 2 entlang. Dabei trifft der Noppen 16 mit seiner Anlaufschräge 15 auf die Polkernkante und gleitet über diese hinweg, da der Noppen infolge der federnden Eigenschaft des Armes 14 ausweichen kann. Das Klemmteil 7 wird soweit in den Hohlraum hineingeschoben, bis der Noppen 16 deckungsgleich vor der Bohrung 17 steht. Durch die Federwirkung des Armes 14 wird der Noppen 16 in die Bohrung 17 gedrückt und liegt mit seiner runden Außenkontur an der Bohrung 17 an. Damit ist das Klemmteil 7 sicher mit dem Polkern 2 verrastet und vermag durch seine die Wicklungsspule 3 untergreifenden Haltearme 12 die Wicklungsspule sicher auf dem Polkern zu halten.

## Patentansprüche

1. Wicklungsspulen aufweisende elektrische Maschine, bei der die Wicklungsspulen (3) von der Ständerbohrung her auf am Ständer der Maschine vorgesehene Polkerne (2) aufsteckbar und an den Polkernen (2) mittels Klemmteilen (7) gehalten sind, die zwischen dem jeweiligen Polkern (2) und der auf diesen aufgesteckten Wicklungsspule (3) eingefügt und innerhalb des von der Wicklungsspule (3) überdeckten Bereiches an dem Polkern verrastet sind, welche Klemmteile (7) mindestens einen die Wicklungsspule (3) auf der zum freien Ende des Polkerns (2) hin liegenden Spulenseite untergreifenden Haltearm (12) aufweisen,
**dadurch gekennzeichnet**,
daß die Klemmteile auf den Stirnseiten (5) der Polkerne (2) zwischen der jeweiligen Stirnseite (5) und der aufgesteckten Wicklungsspule (3) eingefügt sind und wenigstens zwei sich entgegengesetzt in Umfangsrichtung der Maschine erstreckende Haltearme (12) aufweisen.

2. Maschine nach Anspruch 1,
**dadurch gekennzeichnet**,
daß die Kontur der der Wicklungsspule (3) zugewandten Seite (8,9) des Klemmteils (7) dem bogenförmigen Verlauf der Wicklungsspule (3) um die Stirnseiten (5) des Polkerns (2) angepaßt ist.

3. Maschine nach Anspruch 1 oder 2,
**dadurch gekennzeichnet,**
daß der an der Wicklungsspule (3) anliegende Wandteil (8,9) des Klemmteils (7) nachgiebig ausgebildet ist.

4. Maschine nach Anspruch 1,2 oder 3,
**dadurch gekennzeichnet,**
daß an der Stirnseite (5) des Polkerns jeweils mindestens eine innerhalb des von der Wicklungsspule (3) überdeckten Bereiches des Polkerns (2) liegende Bohrung (17) vorgesehen und an der dem Polkern (2) benachbarten Wandseite (10) des Klemmteils (7) mindestens ein mit der Bohrung (17) verrastbarer Noppen (16) federnd angeordnet ist.

5. Maschine nach einem oder mehreren der Ansprüche 1 bis 4,
**dadurch gekennzeichnet**,
daß in dem an der Wicklungsspule (3) anliegenden Wandteil (8,9) des Klemmteils (7) ein oder mehrere Sensoren angeordnet sind.

6. Maschine nach Anspruch 5,
**dadurch gekennzeichnet**,
daß die Anschlußleitungen (19) der Sensoren durch einen am Klemmteil (7) ausgebildeten freien Raum zu der dem freien Ende der Polkerne (2) zugewandten Seite des Klemmteils (7) hin aus diesem herausgeführt sind.

7. Maschine nach Anspruch 6,
**dadurch gekennzeichnet,**
daß auf einer oder beiden Längsseiten der Wicklungsspule (3) Halterungen (20) für die Anschlußleitungen (19) der Sensoren angeordnet sind.

8. Maschine nach Anspruch 7, bei der die Wicklungsspulen (3) auf die Polkerne von zwischen Hauptpolen der Maschine liegenden Wendepolen aufgesteckt sind,
**dadurch gekennzeichnet**,
daß die Halterungen (20) aus zwischen den Wicklungsspulen (3) und den auf den Hauptpolen (22) aufgebrachten Wicklungsspulen (21) eingefügten Distanzstücken (24) bestehen, die mit einem eine Aufnahmenut (26) aufweisenden, die Spulenlängsseite untergreifenden Ansatz (25) versehen sind.

9. Maschine nach Anspruch 8,
**dadurch gekennzeichnet**,
daß die Distanzstücke (24) mit sich in Längsrichtung der Maschine erstreckenden Durchbrechungen (27) versehen sind.

## Claims

1. Electrical machine having winding coils, in which the winding coils (3) are mounted from the direction of the stator bore onto pole cores (2) provided on the stator of the machine and are retained on the pole cores (2) by means of clamping parts (7) which are inserted between the respective pole cores (2) and the winding coil (3) mounted on these pole cores (2), and are latched to the pole cores within the area covered by the winding coil (3), which clamping parts (7) have at least one retaining arm (12) extending under the winding coil (3) on the side of the coil facing the exposed end of the pole core (2), **characterised in that** the clamping parts are inserted on the end faces (5) of the pole cores (2) between the respective end face (5) and the mounted winding coil (3), and have at least two retaining arms (12) extending in opposite circumferential directions of the machine.

2. Machine according to Claim 1,
**characterised in that**
the contour of the side (8, 9) of the clamping part (7) facing the winding coil (3) is matched to the arc-shaped profile of the winding coil (3) around the end faces (5) of the pole core (2).

3. Machine according to Claim 1 or 2,
**characterised in that**
the wall part (8, 9) of the clamping part (7) abutting the winding coil (3) has a flexible construction.

4. Machine according to Claim 1, 2 or 3,
**characterised in that**
at least one hole (17) is provided on the end face (5) of the pole core within the area of the pole core (2) covered by the winding coil (3), and at least one knob (16) which is capable of latching with the hole (17) is flexibly arranged on the wall side (10) of the clamping part (7) adjacent to the pole core (2).

5. Machine according to one or more of the Claims 1 to 4,
**characterised in that**
one or more sensors are arranged in the wall part (8, 9) of the clamping part (7) abutting the winding coil (3).

6. Machine according to Claim 5,
**characterised in that**
the connecting leads (19) of the sensors are brought out of the clamping part (7) through a free space formed in the clamping part (7) at the side of the clamping part (7) facing the exposed end of the pole core (2).

7. Machine according to Claim 6,
**characterised in that**
retainers (20) for the connecting leads (19) of the sensors are arranged on one or both longitudinal sides of the winding coil (3).

8. Machine according to Claim 7, in which the winding coils (3) are mounted on the pole cores of commutating poles positioned between main poles of the machine,
**characterised in that**
the retainers (20) consist of spacers (24) inserted between the winding coils (3) and the winding coils (21) placed on the main poles (22), which spacers (24) are provided with a projection (25) having a locating slot (26) and extending under the longitudinal side of the coil.

9. Machine according to Claim 8,
**characterised in that**
the spacers (24) are provided with openings (27) extending in the longitudinal direction of the machine.

## Revendications

1. Machine électrique comportant des bobines d'enroulement, dans laquelle les bobines d'enroulement (3) peuvent être enfichées à partir du perçage statorique, sur des noyaux polaires (2) prévus sur le stator de la machine, et sont maintenues sur les noyaux polaires (2) à l'aide d'éléments de serrage (7), qui sont insérés entre le noyau polaire respectif (2) et la bobine d'enroulement (3) branchée sur ce noyau et sont encliquetés, à l'intérieur de la zone recouverte par la bobine d'enroulement (3), sur le noyau polaire, lesquels éléments de serrage (7) comprennent au moins un bras de retenue (12), qui s'engage au-dessous de la bobine d'enroulement (3), sur le côté de la bobine tourné vers l'extrémité libre du noyau polaire (2), caractérisée par le fait que les éléments de serrage sont insérés sur les faces frontales (5) des noyaux polaires (2) entre la face frontale respective (5) et la bobine d'enroulement enfichée (3) et comportent au moins deux bras de retenue (12), qui s'étendent en des sens opposés dans la direction circonférentielle de la bobine.

2. Machine suivant la revendication 1, caractérisée par le fait que le contour de la face (8,9) de l'élément de serrage (7), tournée vers la bobine d'enroulement (3), est adapté à la forme d'arc de cercle de la bobine d'enroulement (3) autour des faces frontales (5) du noyau polaire (2).

3. Machine suivant la revendication 1 ou 2, caractérisée en ce que l'élément de paroi (8,9), qui est appliqué contre la bobine d'enroulement (3) de l'élément de serrage (7) est agencé de manière à être flexible.

4. Machine suivant la revendication 1, 2 ou 3, caractérisée par le fait que sur la face frontale (5) du noyau polaire est prévu respectivement au moins un perçage (17) qui est situé à l'intérieur de la zone du noyau polaire (2) qui est recouverte par la bobine d'enroulement (3), et que sur la face (10), voisine du noyau polaire (2), de la paroi de l'élément de serrage (7), est monté élastiquement au moins un téton (16), qui peut s'encliqueter dans le perçage (17).

5. Machine suivant une ou plusieurs des revendications 1 à 4, caractérisée par le fait qu'un ou plusieurs détecteurs sont disposés dans l'élément de paroi (8,9), appliqué contre la bobine d'enroulement (3), de l'élément de serrage (7).

6. Machine suivant la revendication 5, caractérisée par le fait que les conducteurs de raccordement (19) des détecteurs ressortent de l'élément de serrage (7), à travers un espace libre, formé dans l'élément de serrage (7), en direction du côté de cet élément de serrage, qui est tourné vers l'extrémité libre des noyaux polaires (2).

7. Machine suivant la revendication 6, caractérisée par le fait que des éléments de retenue (20) pour les conducteurs de raccordement (19) des détecteurs sont disposés sur l'un des côtés longitudinaux ou sur les deux côtés longitudinaux de la bobine d'enroulement (3).

8. Machine suivant la revendication 7, dans laquelle les bobines d'enroulement (3) sont enfichées sur les noyaux polaires de pôles de commutation situés entre les pôles principaux de la machine, caractérisée par le fait que les éléments de retenue (20) sont constitués par des entretoises (24), qui sont insérées entre les bobines d'enroulement (3) et les bobines d'enroulement (21) disposées sur les pôles principaux (22), et qui sont pourvues d'un appendice saillant (25) qui possède une rainure de réception (26) et s'engage au-dessus du côté longitudinal de la bobine.

9. Machine suivant la revendication 8, caractérisée par le fait que les entretoises (24) sont pourvues de passages (27) qui s'étendent dans la direction longitudinale de la machine.
